# EUROPÄISCHE PATENTANMELDUNG

(11) **EP 3 872 365 A1**
(43) Veröffentlichungstag der Anmeldung: **01.09.2021**
(21) Anmeldenummer: 20020088.9
(22) Anmeldetag: 26.02.2020
(51) Int. Cl.: F16H 1/36, F16H 1/28

(54) **ZAHNRADGETRIEBE**

(71) Anmelder: Harder, Thomas, 89257 Illertissen (DE)
(72) Erfinder: Harder, Franz, 89257 Illertissen (DE)
(74) Vertreter: Limbeck, Achim

(57) **Zusammenfassung**

Die vorliegende Erfindung betrifft ein Zahnradgetriebe (1) mit einem Antriebszahnrad (10), einem Hauptzahnrad (11) sowie einem Abtriebszahnrad (12), wobei der Mittelpunkt (M) des Hauptzahnrads (11) und die Achse (A) des Abtriebszahnrads (12) koaxial ausgerichtet sind und das Antriebszahnrad (10) sowohl mit dem Hauptzahnrad (10) als auch mit dem Abtriebszahnrad (12) gleichzeitig in ständigem Zahneingriff steht, wobei das Abtriebszahnrad (12) mindestens einen Zahn (120) weniger aufweist als das Antriebszahnrad (10) oder das Antriebszahnrad (10) mindestens einen Zahn (100) weniger aufweist als das Abtriebszahnrad (12) und zur Realisierung einer Blockadefunktion des Getriebes (1), welche sich aufgrund der Anordnung der Zahnräder (10, 11, 12) auf sämtliche Zahnräder (10, 11, 12) auswirkt, das Hauptzahnrad (11) vorteilhafterweise nicht drehbar am Zahnradgetriebe (1) montiert ist.

## Beschreibung

### Technisches Gebiet

Die vorliegende Erfindung betrifft ein Zahnradgetriebe gemäß dem Oberbegriff des Patentanspruchs 1.

### Stand der Technik

Es sind aus dem Stand der Technik bereits Zahnradgetriebe in den unterschiedlichsten Ausführungsformen bekannt. In der Regel weisen diese mindestens ein gewöhnlich an einer Antriebswelle angeordnetes Antriebszahnrad, mindestens ein Haupt- oder Zwischenzahnrad sowie zumindest ein mit einer Abtriebswelle verbundenes Abtriebszahnrad auf, wobei das Antriebszahnrad und das Haupt- oder Zwischenzahnrad sowie das Abtriebszahnrad und das Haupt- oder Zwischenzahnrad jeweils in ständigem Zahneingriff miteinander stehen. Die Untersetzungsfunktion wird dabei regelmäßig dadurch erreicht, dass das Abtriebszahnrad und das Antriebszahnrad jeweils unterschiedliche Durchmesser sowie eine dadurch bedingte unterschiedliche Anzahl an Zähnen umfassen.

### Darstellung der Erfindung

Der vorliegenden Erfindung liegt die Aufgabe zugrunde, ein Zahnradgetriebe zu schaffen, dass konstruktiv einfach gebaut ist.

Erfindungsgemäß wird die voranstehende Aufgabe gemäß dem Oberbegriff des Anspruchs 1 in Verbindung mit den kennzeichnenden Merkmalen gelöst. Vorteilhafte Ausgestaltungen und Weiterbildungen des erfindungsgemäßen Zahnradgetriebes sind in den abhängigen Unteransprüchen angegeben.

Das erfindungsgemäße Zahnradgetriebe umfasst ein Antriebszahnrad, ein Hauptzahnrad sowie ein vorzugsweise aber nicht zwingend mit einer Abtriebswelle verbundenes Abtriebszahnrad.

Erfindungsgemäß ist das Zahnradgetriebe der eingangs genannten Art dadurch gekennzeichnet, dass der Mittelpunkt des Hauptzahnrads und die Achse des Abtriebszahnrads koaxial ausgerichtet sind, wobei das Antriebszahnrad sowohl mit dem Hauptzahnrad als auch mit dem Abtriebszahnrad gleichzeitig in ständigem Zahneingriff steht, so dass die auf Seite des Hauptzahnrads und auf Seite des Abtriebszahnrad eingreifenden Zähne des Antriebszahnrads in die Zähne des Haupt- und Abtriebszahnrad gleichermaßen eingreifen.

Zur Realisierung einer Unter- oder Übersetzung weist entweder das Abtriebszahnrad mindestens einen Zahn weniger auf als das Antriebszahnrad oder das Antriebszahnrad mindestens einen Zahn weniger auf als das Abtriebszahnrad.

Durch das Verbinden von Haupt- und Abtriebszahnrad mit einer unterschiedlichen Zähnezahl, bspw. 30 und 31 Zähnen sowie einem Antriebszahnrad, das über die Zahnreihen des Haupt- und Abtriebszahnrades reicht und bei diesen in Eingriff steht, wird eine unterschiedliche Drehzahl von Haupt- und Abtriebszahnrad erreicht.

Gleichzeitig ergibt sich eine schlüssige Verbindung durch das Antriebszahnrad, welches bewirkt, dass Haupt- und Abtriebszahnrad untrennbar verbunden und mithin fixiert sind (nachstehend als Blockadefunktion bezeichnet). Dies gilt für alle Anwendungen, sowohl bei der Außenverzahnung als auch bei der Innenverzahnung genauso wie für unterschiedliche Untersetzungen.

Zur Realisierung der Blockadefunktion des erfindungsgemäßen Zahnradgetriebes, welche sich aufgrund der Anordnung sämtlicher Zahnräder auf sämtliche Zahnräder auswirkt, ist das Hauptzahnrad vorteilhafterweise nicht drehbar am Zahnradgetriebe bzw. an dessen Gehäuse, Rahmen oder dergleichen montiert.

### Kurzbeschreibung der Zeichnungen

Weitere Ziele, Merkmale, Vorteile und Anwendungsmöglichkeiten des erfindungsgemäßen Zahnradgetriebes ergeben sich aus der nachfolgenden Beschreibung eines Ausführungsbeispiels anhand der Zeichnungen.

In den Zeichnungen zeigen
Fig. 1 das erfindungsgemäße Zahnradgetriebe in einer schematischen Darstellung in einer Fron- und Seitenschnittansicht.
Fig. 2 eine vergrößerte Darstellung der Verzahnung.

### Ausführung der Erfindung

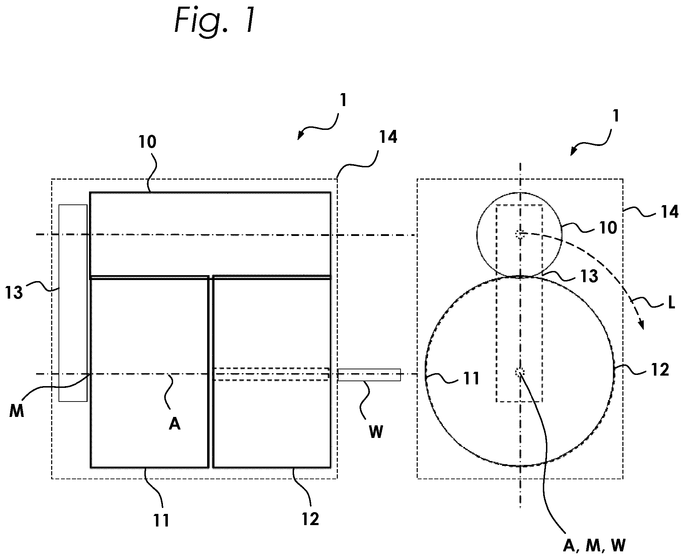

Wie aus Fig. 1 ersichtlich, ist das erfindungsgemäße Zahnradgetriebe 1 aus einem Antriebszahnrad 10, einem Hauptzahnrad 11 sowie einem Abtriebszahnrad 12 gebildet, wobei das Hauptzahnrad 11 und das Abtriebszahnrad 12 eine Außenverzahnung aufweisen und das Antriebszahnrad 10 am Außenumfang des Hauptzahnrads 11 sowie am Außenumfang des Abtriebszahnrads 12 um die Achse A rotiert.

In einer weiteren nicht dargestellten Ausführungsform der Erfindung kann das Zahnradgetriebe 1 auch dergestalt ausgeführt sein, dass das Hauptzahnrad 11 und das Abtriebszahnrad 12 eine Innenverzahnung aufweisen, wobei das Antriebszahnrad 10 am Innenumfang des Hauptzahnrads 11 sowie am Innenumfang des Abtriebszahnrads 12 um die Achse A rotiert.

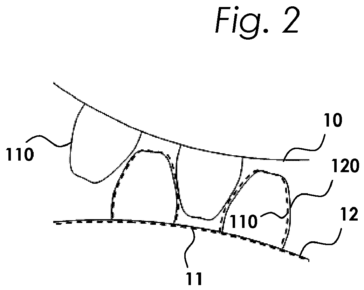

Wie aus den Fign. 1 und 2 ersichtlich, ist am Zahnradgetriebe 1 zumindest ein Antriebsmittel 13 für das Antriebszahnrad 10 angeordnet oder anordbar, dessen die Antriebsachse N vorteilhafterweise auf der Achse A liegt.

Das Hauptzahnrad 11 und das Abtriebszahnrad 12 weisen vorteilhafterweise in etwa den gleichen Durchmesser auf, wobei minimale Unterschiede, gemessen in wenigen Millimetern, selbstverständlich und insbesondere aufgrund denkbarer, unterschiedlicher Ausbildungen der Zähne 100, 120 möglich sind.

Wie aus Fig. 2 ersichtlich, sind die durch die unterschiedliche Verzahnung bzw. Anzahl der Verzahnung angeordneten Zähne 110, 120 notwendigerweise versetzt angeordnet.

Zwischen den Zähnen 100, 110 sowie 100 und 120 kann es in Abhängigkeit der Material-Ausführung der Zähne 100, 110, 120, welche vorteilhafterweise aus einem harten Kunststoff oder aus einem Metall gefertigt sind, demgemäß nicht immer zu einem 100%igen Formschluss an sämtlichen Zähnen 100, 110, 120 kommen, sondern es kann ein Spalt entstehen, der durch entsprechende Ausbildung und Anordnung der Zähne 100, 110, 120 vorteilhafterweise so ausgebildet ist, dass ein Verschleiß der Zähne 100, 110, 120 wirksam vermieden wird. Hierzu kann es bspw. vorteilhaft sein, dass die Zähne 110 des Hauptzahnrads 11 und die Zähne 120 des Abtriebszahnrads 12 in ihrer Form unterschiedlich ausgebildet oder ausgeprägt sind.

Das erfindungsgemäße Zahnradgetriebe 1 beschränkt sich in seiner Ausführung nicht auf die vorstehend angegebenen bevorzugten Ausführungsformen. Vielmehr sind eine Vielzahl von Ausgestaltungsvariationen denkbar, welche von der dargestellten Lösung auch bei grundsätzlich anders gearteter Ausführung Gebrauch machen.

### Liste der Bezugsziffern

- 1: Zahnradgetriebe
- 10: Antriebszahnrad
- 11: Hauptzahnrad
- 12: Abtriebszahnrad
- 13: Antriebsmittel
- 14: Gehäuse des Zahnradgetriebes
- 100: Zähne am Antriebszahnrad
- 110: Zähne am Hauptzahnrad
- 120: Zähne am Abtriebszahnrad
- A: Achse der Abtriebswelle
- L: Laufrichtung des Antriebsrads
- M: Mittelpunkt des Hauptzahnrads
- W: Abtriebswelle

## Patentansprüche

1. Zahnradgetriebe (1) mit einem Antriebszahnrad (10), einem Hauptzahnrad (11) sowie einem Abtriebszahnrad (12),
**dadurch gekennzeichnet, dass**
der Mittelpunkt (M) des Hauptzahnrads (11) und die Achse (A) des Abtriebszahnrads (12) koaxial ausgerichtet sind, wobei das Antriebszahnrad (10) sowohl mit dem Hauptzahnrad (10) als auch mit dem Abtriebszahnrad (12) gleichzeitig in ständigem Zahneingriff steht, wobei das Abtriebszahnrad (12) mindestens einen Zahn (120) weniger aufweist als das Antriebszahnrad (10) oder das Antriebszahnrad (10) mindestens einen Zahn (100) weniger aufweist als das Abtriebszahnrad (12).

2. Zahnradgetriebe (1) nach Anspruch 1,
**dadurch gekennzeichnet, dass**
zur Realisierung einer Blockadefunktion des Getriebes (1), welche sich aufgrund der Anordnung der Zahnräder (10, 11, 12) auf sämtliche Zahnräder (10, 11, 12) auswirkt, das Hauptzahnrad (11) nicht drehbar am Zahnradgetriebe (1) montiert ist.

3. Zahnradgetriebe (1) nach Anspruch 1 oder 2,
**dadurch gekennzeichnet, dass**
das Hauptzahnrad (11) und das Abtriebszahnrad (12) eine Außenverzahnung aufweisen, wobei das Antriebszahnrad (10) am Außenumfang des Hauptzahnrads (11) sowie am Außenumfang des Abtriebszahnrads (12) um die Achse (A) rotiert.

4. Zahnradgetriebe (1) nach einem der vorangegangenen Ansprüche1 bis 3,
**dadurch gekennzeichnet, dass**
das Hauptzahnrad (11) und das Abtriebszahnrad (12) eine Innenverzahnung aufweisen, wobei das Antriebszahnrad (10) am Innenumfang des Hauptzahnrads (11) sowie am Innenumfang des Abtriebszahnrads (12) um die Achse (A) rotiert.

5. Zahnradgetriebe (1) nach einem der vorangegangenen Ansprüche,
**dadurch gekennzeichnet, dass**
am Zahnradgetriebe (1) zumindest ein Antriebsmittel (13) für das Antriebszahnrad (10) angeordnet oder anordbar ist.

6. Zahnradgetriebe (1) nach Anspruch 6,
**dadurch gekennzeichnet, dass**
die Antriebsachse (N) des Antriebsmittels (13) auf der Achse (A) liegt.

7. Zahnradgetriebe (1) nach einem der vorangegangenen Ansprüche,
**dadurch gekennzeichnet, dass**
das Hauptzahnrad (11) und das Abtriebszahnrad (12) den gleichen Durchmesser aufweisen.

8. Zahnradgetriebe (1) nach einem der vorangegangenen Ansprüche,
**dadurch gekennzeichnet, dass**
die Zähne des Hauptzahnrads (11) und des Abtriebszahnrads (12) in ihrer Form unterschiedlich ausgebildet oder ausgeprägt sind.
